(19) Europäisches Patentamt
European Patent Office
Office européen des brevets

(11) **EP 3 120 562 B1**

(12) **EUROPEAN PATENT SPECIFICATION**

(45) Date of publication and mention
of the grant of the patent:
**04.03.2020 Bulletin 2020/10**

(51) Int Cl.:
*H04N 19/70* *(2014.01)*          *H04N 19/80* *(2014.01)*
*H04N 19/33* *(2014.01)*          *H04N 19/59* *(2014.01)*

(21) Application number: **15714726.5**

(22) Date of filing: **18.03.2015**

(86) International application number:
**PCT/US2015/021341**

(87) International publication number:
**WO 2015/143090 (24.09.2015 Gazette 2015/38)**

(54) **SCALABLE VIDEO CODING USING REFERENCE AND SCALED REFERENCE LAYER OFFSETS**

SKALIERBARE VIDEOCODIERUNG MIT REFERENZ- UND SKALIERTE REFERENZSCHICHT-OFFSETS

CODAGE VIDÉO ÉCHELONNABLE AU MOYEN DE DÉCALAGES DE COUCHES DE RÉFÉRENCE ET DE RÉFÉRENCE MISE À L'ÉCHELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2014 US 201461955123 P**

(43) Date of publication of application:
**25.01.2017 Bulletin 2017/04**

(73) Proprietor: **ARRIS Enterprises LLC
Suwanee, GA 30024 (US)**

(72) Inventors:
• **MINOO, Koohyar**
  **San Diego, California 92122 (US)**
• **BAYLON, David M.**
  **San Diego, California 92131 (US)**
• **LUTHRA, Ajay K.**
  **San Diego, California 92130 (US)**

(74) Representative: **Openshaw & Co.
8 Castle Street
Farnham, Surrey GU9 7HR (GB)**

(56) References cited:
**WO-A1-2014/039547**

• MINOO K ET AL: "AHG13: SHVC Upsampling with phase offset adjustment", 104. MPEG MEETING; 22-4-2013 - 26-4-2013; INCHEON; (MOTION PICTURE EXPERT GROUP OR ISO/IEC JTC1/SC29/WG11),, no. m28720, 20 April 2013 (2013-04-20), XP030057253,
• MINOO K ET AL: "On handling re-sampling phase offsets with fixed filters", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-P0177-v2, 10 January 2014 (2014-01-10), XP030115704,
• CHEN J ET AL: "High efficiency video coding (HEVC) scalable extension Draft 5", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-P1008-v4, 22 January 2014 (2014-01-22), XP030115882, cited in the application

EP 3 120 562 B1

- MINOO K ET AL: "Non SCE1: On handling resampling phase offsets with fixed filters", 14. JCT-VC MEETING; 25-7-2013 - 2-8-2013; VIENNA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-N0272-v3, 26 July 2013 (2013-07-26), XP030114801,
- CHEN J ET AL: "MV-HEVC/SHVC HLS: On signaling of scaled reference offset", 14. JCT-VC MEETING; 25-7-2013 - 2-8-2013; VIENNA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-N0089, 16 July 2013 (2013-07-16) , XP030114535,
- GARY J. SULLIVAN ET AL: "Standardized Extensions of High Efficiency Video Coding (HEVC)", IEEE JOURNAL OF SELECTED TOPICS IN SIGNAL PROCESSING, vol. 7, no. 6, 1 December 2013 (2013-12-01), pages 1001-1016, XP055142633, ISSN: 1932-4553, DOI: 10.1109/JSTSP.2013.2283657
- ANDERSSON K ET AL: "Fix for the computation of scaling factors used in inter-layer prediction", 17. JCT-VC MEETING; 27-3-2014 - 4-4-2014; VALENCIA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-Q0104, 17 March 2014 (2014-03-17), XP030116020,
- MINOO K ET AL: "Increased resolution for scaled reference layer offset", 17. JCT-VC MEETING; 27-3-2014 - 4-4-2014; VALENCIA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-Q0119-v2, 27 March 2014 (2014-03-27), XP030116042,
- YE Y ET AL: "SHVC HLS: On picture level resampling phase filter selection", 17. JCT-VC MEETING; 27-3-2014 - 4-4-2014; VALENCIA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-Q0107, 18 March 2014 (2014-03-18), XP030116025,

**Description**

TECHNICAL FIELD

The present invention relates to a sampling filter process for scalable video coding. More specifically, the present invention relates to re-sampling using video data obtained from an encoder or decoder process, where the encoder or decoder process can be MPEG-4 Advanced Video Coding (AVC) or High Efficiency Video Coding (HEVC). Further, the present invention specifically relates to Scalable HEVC (SHVC) that includes a two layer video coding system.

BACKGROUND

Scalable video coding (SVC) refers to video coding in which a base layer (BL), sometimes referred to as a reference layer, and one or more scalable enhancement layers (EL) are used. For SVC, the base layer can carry video data with a base level of quality. The one or more enhancement layers can carry additional video data to support higher spatial, temporal, and/or signal-to-noise SNR levels. Enhancement layers may be defined relative to a previously coded layer.

The base layer and enhancement layers can have different resolutions. Upsampling filtering, sometimes referred to as resampling filtering, may be applied to the base layer in order to match a spatial aspect ratio or resolution of an enhancement layer. This process may be called spatial scalability. An upsampling filter set can be applied to the base layer, and one filter can be chosen from the set based on a phase (sometimes referred to as a fractional pixel shift). The phase may be calculated based on the ratio between base layer and enhancement layer picture resolutions.

MINOO K ET AL, "AHG13: SHVC Upsampling with phase offset adjustment", 104. MPEG MEETING; 22-4-2013 - 26-4-2013; INCHEON; (MOTION PICTURE EXPERT GROUP OR ISO/IEC JTC1/SC29/WG11), 20 April 2013, discusses SHVC allowing for upsampling with phase offset adjustment to compensate for phase offsets introduced by downsampling or to maintain proper luma/chroma color space positions after upsampling. MINOO K ET AL, "On handling re-sampling phase offsets with fixed filters", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16), 10 January 2014, discusses an approach to signalling phase offsets to improve inter-layer prediction precision and hence the compression performance of SHEVC.

SUMMARY

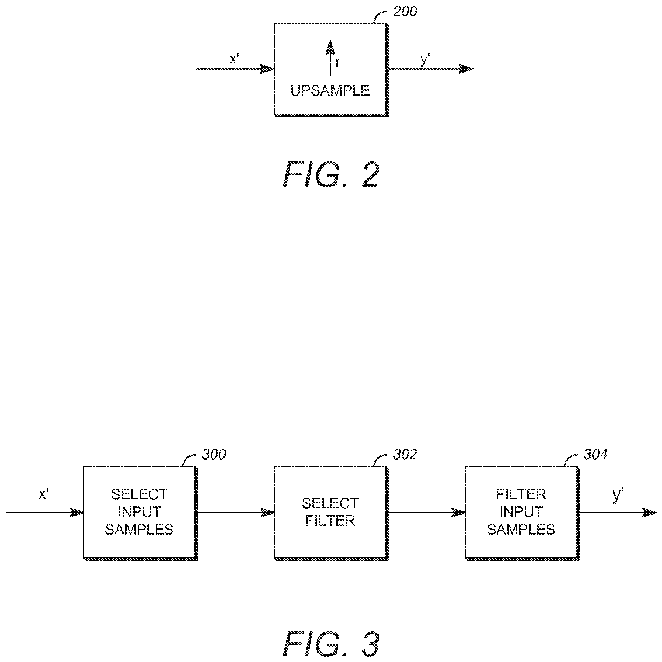

Embodiments of the present invention provide methods, devices and systems for the upsampling process from BL resolution to EL resolution to implement the upsampling of Fig. 2. The upsampling process of embodiments of the present invention includes three separate modules, a first module to select input samples from the BL video signal, a second module to select a filter for filtering the samples, and a third module using phase filtering to filter the input samples to recreate video that approximates the EL resolution video. The filters of the third module can be selected from a set of fixed filters each with different phase. In these modules, the selection of the input samples and filters for generating the output samples are determined based upon a mapping between the EL sample positions and the corresponding BL sample positions. The embodiments included herein are related to the mapping or computation between the EL and the BL sample positions. One embodiment includes a system for scalable video coding, as defined in the appended independent claim 1. The invention is defined in the appended claims.

BRIEF DESCRIPTION OF THE DRAWINGS

Further details of the present invention are explained with the help of the attached drawings in which:

Fig. 1 is a block diagram of components in a scalable video coding system with two layers;
Fig. 2 illustrates an upsampling process that can be used to convert the base layer data to the full resolution layer data for Fig. 1;
Fig. 3 shows a block diagram of components for implementing the upsampling process of Fig. 2;
Fig. 4 shows components of the select filter module and the filters, where the filters are selected from fixed or adaptive filters to apply a desired phase shift;
Fig. 5a and 5b is a simplified flow chart showing the process for determining the reference layer location based upon the syntax used in a method for coding scalable video.
Fig. 6 is a simplified block diagram that illustrates an example video coding system.

DETAILED DESCRIPTION

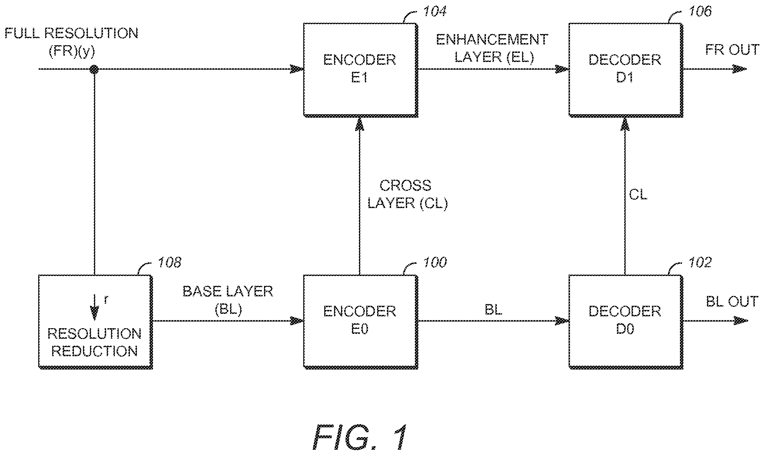

An example of a scalable video coding system using two layers is shown in Fig. 1. In the system of Fig. 1, one of the two layers is the Base Layer (BL) where a BL video is encoded in an Encoder E0, labeled 100, and decoded in a decoder D0, labeled 102, to produce a base layer video output BL out. The BL video is typically at a lower quality than the remaining layers, such as the Full Resolution (FR) layer that receives an input FR (y). The FR layer includes an encoder E1, labeled 104, and a decoder D1, labeled 106. In encoding in encoder E1 104 of the full resolution video, cross-layer (CL) information from the BL encoder 100 is used to produce enhancement layer (EL) information. The corresponding EL bitstream of the full resolution layer is then decoded in decoder D1 106 using the CL information from decoder D0 102 of the BL to output full resolution video, FR out. By using CL information in a scalable video coding system, the encoded information can be transmitted more efficiently in the EL than if the FR was encoded independently without the CL information. An example of coding that can use two layers shown in Fig. 1 includes video coding using AVC and the Scalable Video Coding (SVC) extension of AVC, respectively. Another example that can use two layer coding is HEVC.

Fig. 1 further shows block 108 with a down-arrow r illustrating a resolution reduction from the FR to the BL to illustrate that the BL can be created by a downsampling of the FR layer data. Although a downsampling is shown by the arrow r of block 108 Fig. 1, the BL can be independently created without the downsampling process. Overall, the down arrow of block 108 illustrates that in spatial scalability, the base layer BL is typically at a lower spatial resolution than the full resolution FR layer. For example, when r = 2 and the FR resolution is 3840x2160, the corresponding BL resolution is 1920x1080.

The cross-layer CL information provided from the BL to the FR layer shown in Fig. 1 illustrates that the CL information can be used in the coding of the FR video in the EL. In one example, the CL information includes pixel information derived from the encoding and decoding process of the BL. Examples of BL encoding and decoding are AVC and HEVC. Because the BL pictures are at a different spatial resolution than the FR pictures, a BL picture needs to be upsampled (or re-sampled) back to the FR picture resolution in order to generate a suitable prediction for the FR picture.

Fig. 2 illustrates an upsampling process in block 200 of data from the BL layer to the EL. The components of the upsampling block 200 can be included in either or both of the encoder E1 104 and the decoder D1 106 of the EL of the video coding system of Fig. 1. The BL data at resolution x that is input into upsampling block 200 in Fig. 2 is derived from one or more of the encoding and decoding processes of the BL. A BL picture is upsampled using the up-arrow r process of block 200 to generate the EL resolution output y' that can be used as a basis for prediction of the original FR input y.

The upsampling block 200 works by interpolating from the BL data to recreate what is modified from the FR data. For instance, if every other pixel is dropped from the FR in block 108 to create the lower resolution BL data, the dropped pixels can be recreated using the upsampling block 200 by interpolation or other techniques to generate the EL resolution output y' from upsampling block 200. The data y' is then used to make encoding and decoding of the EL data more efficient.

**I. Overview of Upsampling Circuitry**

Fig. 3 shows a general block diagram for implementing an upsampling process of Fig. 2 for embodiments of the present invention. The upsampling or re-sampling process can be determined to minimize an error E (e.g. mean-squared error) between the upsampled data y' and the full resolution data y. The system of Fig. 3 includes a select input samples module 300 that samples an input video signal. The system further includes a select filter module 302 to select a filter from the subsequent filter input samples module 304 to upsample the selected input samples from module 300.

In module 300, a set of input samples in a video signal x is first selected. In general, the samples can be a two-dimensional subset of samples in x, and a two-dimensional filter can be applied to the samples. The module 302 receives the data samples in x from module 300 and identifies the position of each sample from the data it receives, enabling module 302 to select an appropriate filter to direct the samples toward a subsequent filter module 304. The filter in module 304 is selected to filter the input samples, where the selected filter is chosen or configured to have a phase corresponding to the particular output sample location desired.

The filter input samples module 304 can include separate row and column filters. The selection of filters is represented herein as filters h[n; p], where the filters can be separable along each row or column, and p denotes a phase index selection for the filter. The output of the filtering process using the selected filter h[n;p] on the selected input samples produces output value y'.

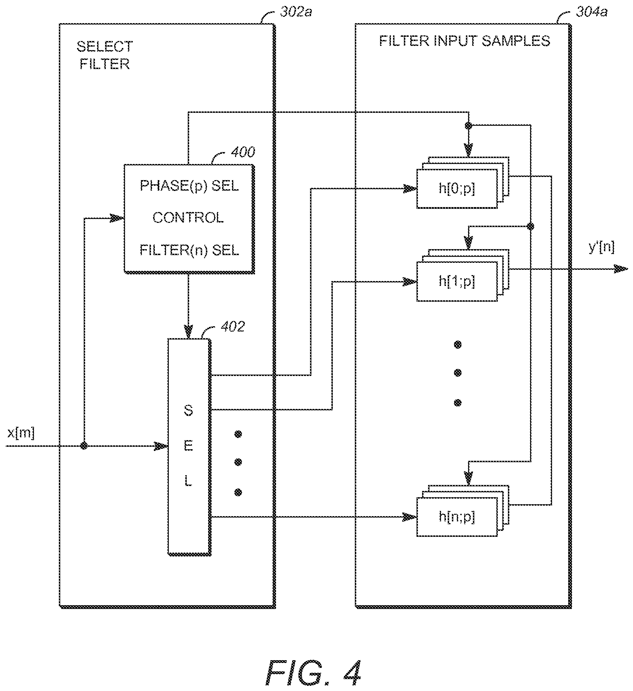

Fig. 4 shows details of components for the select sample module 302 of Fig. 3 (labeled 302a in Fig. 4) and the filters module 304 of Fig. 3 (labeled 304a in Fig. 4) for a system with fixed filters. For separable filtering the input samples can be along a row or column of data. To supply a set of input samples from select input samples module 300, the select filter module 302a includes a select control 400 that identifies the input samples x[m] and provides a signal to a selector 402 that directs them through the selector 402 to a desired filter. The filter module 304a then includes the different filters h[n;p] that can be applied to the input samples, where the filter phase can be chosen among P phases from each row or column element depending on the output sample m desired. As shown, the selector 402 of module 302a directs the input samples to a desired column or row filter in 304a based on the "Filter (n) SEL" signal from select control 400. A separate select control 400 signal "Phase (p) SEL" selects the appropriate filter phase p for each of the row or column elements. The filter module 304a output produces the output y'[n].

In Fig. 4, the outputs from individual filter components h[n;p] are shown added "+" to produce the output y'[n]. This illustrates that each box, e.g. h[0;p], represents one coefficient or number in a filter with phase p. Therefore, the filter with phase p is represented by all n+1 numbers in h[0,p], ..., h[n;p]. This is the filter that is applied to the selected input samples to produce an output value y'[n], for example, y'[0] = h[0,p]*x[0] + h[1,p]*x[1] + ... + h[n,p]*x[n], requiring the addition function "+" as illustrated. As an alternative to adding in Fig. 4, the "+" could be replaced with a solid connection and the output y'[n] would be selected from one output of a bank of P filters representing the p phases, with the boxes h[n:p] in module 304a relabeled, for example, as h[n;0], h[n,1], ..., h[n,p-1] and now each box would have all the filter coefficients needed to form y'[n] without the addition element required.

## II. Current Syntax for signaling scaled reference layer offsets

In order to accommodate for offset and phase shift differences between the BL and EL samples, phase offset adjustment parameters can be signaled. Let a sample location relative to the top-left sample in the current EL picture be (xP, yP), and a sample location in the BL reference layer in units of 1/16-th sample relative to the top-left sample of the BL be (xRef16, yRef16). In "High efficiency video coding (HEVC) scalable extension Draft 5," JCTVC-P1008_v4, January 2014 ("HEVC Draft 5"), the relationship between (xRef16, yRef16) and ( xP, yP) is given as follows:

$$xRef16 = ( ( ( xP - offsetX ) * ScaleFactorX + addX + ( 1 << 11 ) ) >> 12 ) - ( phaseX << 2 )$$

$$yRef16 = ( ( ( yP - offsetY ) * ScaleFactorY + addY + ( 1 << 11 ) ) >> 12 ) - ( phaseY << 2 )$$

The sample position (xRef16, yRef16) is used to select the input samples and the filters used in computing the output sample values as specified in HEVC Draft 5.

The variables offsetX, addX, offsetY, and addY specify scaled reference layer offset and phase parameters in the horizontal and vertical directions, variables phaseX and phaseY specify reference layer phase offset parameters in the horizontal and vertical directions, and variables ScaleFactorX and ScaleFactorY are computed based on the ratio of the reference layer to the scaled reference layer width and height. These variables are computed based upon phase offset parameters specified in [1]. In particular, the offset parameters offsetX and offsetY are computed as:

$$offsetX = ScaledRefLayerLeftOffset / ( ( cIdx == 0) ? 1 : SubWidthC)$$

$$offsetY = ScaledRefLayerTopOffset / ( ( cIdx == 0) ? 1 : SubHeightC)$$

where variable cIdx specifies the color component index and the values SubWidthC and SubHeightC are specified depending on the chroma format sampling structure and
ScaledRefLayerLeftOffset = scaled_ref_layer_left_offset[rLId] << 1
ScaledRefLayerTopOffset = scaled_ref_layer_top_offset[rLId] << 1
ScaledRefLayerRightOffset = scaled_ref_layer_right_offset[rLId] << 1
ScaledRefLayerBottomOffset = scaled_ref_layer_bottom_offset[rLId] << 1
where rLId specifies the scaled reference layer picture Id. The variables ScaledRefLayerLeftOffset, ScaledRefLayer-TopOffset, ScaledRefLayerRightOffset, and ScaledRefLayerBottomOffset specify offsets in two pixel unit resolution based on the values of the syntax elements scaled_ref_layer_left_offset[rLId], scaled_ref_layer_top_offset[rLId], scaled_ref_layer_right_offset[rLId], and scaled_ref_layer_bottom_offset[rLId].

Table 1 illustrates the signaling of these syntax elements in HEVC Draft 5 at the SPS multilayer extension layer.

Table 1: Current Syntax for signaling scaled layer offsets.

| sps_ multilayer_ extension( ) { | Descriptor |
|---|---|
| inter_view_mv_vert_constraint_flag | u(1) |
| num_scaled_ref_layer_offsets | ue(v) |
| for( i = 0; i < num_scaled_ref_layer_offsets; i++) { | |
| scaled_ref_layer_id[ i ] | u(6) |
| **scaled_ref_layer_left_offset[ scaled_ref_layer_id[ i ] ]** | **se(v)** |
| **scaled_ref_layer_top_offset[ scaled_ref_layer_id[ i ] ]** | **se(v)** |
| **scaled_ref_layer_right_offset[ scaled_ref_layer_id[ i ] ]** | **se(v)** |
| **scaled_ref_layer_bottom_offset[ scaled_ref_layer_id[ i ] ]** | **se(v)** |
| vert_phase_position_enable_flag[scaled _ref_layer_id[ i ] ] | u(1) |
| } | |
| } | |

In Table 1, the signaling occurs at the SPS level. Table 1 shows current syntax for signaling scaled layer offsets (shown in bold type). In Table 1, the four syntax elements listed below are signaled.

**scaled_ref_layer_left_offset**[scaled_ref_layer_id[i]]
**scaled_ref_layer_top_offset**[scaled_ref_layer_id[i]]
**scaled_ref_layer_right_offset**[scaled_ref_layer_id[i]]
**scaled_ref_layer_bottom_offset**[scaled_ref_layer_id[i]]

In HEVC Draft 5, the syntax elements are defined as follows:

**scaled_ref_layer_id**[i] specifies the nuh_layer_id value of the associated inter-layer picture for which scaled_ref_layer_left_offset[i], scaled_ref_layer_top_offset[i], scaled_ref_layer_right_offset[i] and scaled_ref_layer_bottom_offset[i] are specified. The value of scaled_ref_layer_id[i] shall be less than the nuh_layer_id of any layer for which this SPS is the active SPS.

**scaled_ref_layer_left_offset[scaled_ref_layer_id[i]]** specifies the horizontal offset between the top-left luma sample of the associated inter-layer picture with nuh layer id equal to scaled_ref_layer_id[i] and the top-left luma sample of the current picture in units of two luma samples. When not present, the value of scaled_ref_layer_left_offset[scaled_ref_layer_id[i]] is inferred to be equal to 0.

**scaled_ref_layer_top_offset[scaled_ref_layer_id[i]]** specifies the vertical offset between the top-left luma sample of the associated inter-layer picture with nuh_layer_id equal to scaled_ref_layer_id[i] and the top-left luma sample of the current picture in units of two luma samples. When not present, the value of scaled_ref_layer_top_offset[scaled_ref_layer_id[i]] is inferred to be equal to 0.

**scaled_ref_layer_right_offset[scaled_ref_layer_id[i]]** specifies the horizontal offset between the bottom-right luma sample of the associated inter-layer picture with nuh layer id equal to scaled_ref_layer_id[i] and the bottom-right luma sample of the current picture in units of two luma samples. When not present, the value of scaled_ref_layer_right_offset[scaled_ref_layer_id[i]] is inferred to be equal to 0.

**scaled_ref_layer_bottom_offset[scaled_ref_layer_id[i]]** specifies the vertical offset between the bottom-right luma sample of the associated inter-layer picture with nuh layer id equal to scaled_ref_layer_id[i] and the bottom-right luma sample of the current picture in units of two luma samples. When not present, the value of scaled_ref_layer_bottom_offset[scaled_ref_layer_id[i]] is inferred to be equal to 0.

While the offset parameters are signaled at the SPS level, it is desirable to signal below the sequence level in order to accommodate other applications and operations such as interlace/progressive scalability and pan and scan. In addition, it is desirable to increase the resolution of the offset for proper BL and EL alignment.

**Proposed reference layer offsets and increased resolution for scaled reference layer offsets**

In order to accommodate other applications such as interlace/progressive scalability and to increase the resolution for BL and EL alignment, it is proposed that the phase offset adjustment parameters in Tables 2 and 3 be signaled. It is also possible to signal at other levels such as the slice level. Other variations are also possible, such as a flag signaling whether or not offset parameters are signaled at all, or per dimension or color component. Note that fractional pel accuracy of the phase offset parameters can be given in 1/16, 1/4, or 1/2, etc.

In the proposed method, the scaled reference layer offset parameters are signaled at the PPS level. In Table 2, the pps_multilayer_extension syntax is parsed if a pps_extension_type_flag[1] (e.g. pps_multilayer_extension_flag) is set. Table 3 shows the scaled_ref_layer_id, scaled_ref_layer_left_offset, scaled_ref_layer_top_offset, scaled_ref_layer_right_offset and scaled_ref_layer_bottom_offset syntax elements signaled in the pps_multilayer_extension.

The resolution of the scaled reference layer offset can be increased from 2-integer pel. The original coarser resolution allows for selection of a region in the scaled reference layer, while the additional proposed finer resolution allows for finer local phase offset adjustment between layers. Table 3 shows an example of the signaling of the proposed additional phase offset parameters:

**scaled_ref_layer_left_phase**[scaled_ref_layer_id[i]] specifies the horizontal luma offset between nuh layer id equal to scaled_ref_layer_id[i] and the current picture in units of ½ luma samples. This is a signed value between -2 to +2. When not present, the value of scaled_ref_layer_left_phase[scaled_ref_layer_id[i]] is inferred to be equal to 0.

**scaled_ref_layer_top_phase[**scaled_ref_layer_id[i]] specifies the vertical luma offset between nuh_layer_id equal to scaled_ref_layer_id[i] and the current picture in units of ½ luma samples. This is a signed value between -2 to +2. When not present, the value of scaled_ref_layer_top_phase[scaled_ref_layer_id[i]] is inferred to be equal to 0.

**ref_layer_horizontal_delta[**scaled_ref_layer_id[i]] specifies the horizontal luma offset between nuh_layer_id equal to scaled_ref_layer_id[i] and the current picture in units of 1/8 luma samples. This is a signed value between -8 to 8. When not present, the value of ref_layer_horizontal_delta[scaled_ref_layer_id[i]] is inferred to be equal to 0.

**ref_layer_vertical_delta**[scaled_ref_layer_id[i]] specifies the vertical luma offset between nuh_layer_id equal to scaled_ref_layer_id[i] and the current picture in units of 1/8 luma samples. This is a signed value between -8 to +8. When not present, the value of ref_layer_vertical_delta[scaled_ref_layer_id[i]] is inferred to be equal to 0.

**ref_layer_horizontal_delta_chroma**[scaled_ref_layer_id[i]] specifies the horizontal offset between the chroma samples and luma samples in nuh layer id equal to scaled_ref_layer_id[i] in units of ¼ luma samples. This is an unsigned value between 0 to 4. When not present, the value of ref_layer_horizontal_delta_chroma[scaled_ref_layer_id[i]] is inferred to be equal to 2.

**ref_layer_vertical_delta_chroma**[scaled_ref_layer_id[i]] specifies the vertical offset between the chroma samples and luma samples in nuh layer id equal to scaled_ref_layer_id[i] in units of ¼ luma samples. This is an unsigned value between 0 to 4. When not present, the value of ref_layer_vertical_delta_chroma[scaled_ref_layer_id[i]] is inferred to be equal to 2.

**scaled_ref_layer_left_phase_chroma** specifies the horizontal chroma offset relative to luma in units of ¼ luma samples. This is an unsigned value between 0 to 4. When not present, the value of scaled_ref_layer_left_phase_chroma is inferred to be equal to 2.

**scaled_ref_layer_top_phase_chroma** specifies the vertical chroma offset relative to luma in units of ¼ luma samples. This is an unsigned value between 0 to 4. When not present, the value of scaled_ref_layer_top_phase_chroma is inferred to be equal to 2.

The additional syntax elements are used to provide finer alignment between the layers. One example of the use of the syntax is as follows:

```
ScaledRefLayerLeftPhase = scaled_ref_layer_left_phase[rLId]
ScaledRefLayerTopPhase = scaled_ref_layer_top_phase[rLId]
RefLayerHorizontalDelta = ref_layer_horizontal_delta[rLId]
RefLayerVerticalDelta = ref_layer_vertical_delta[rLId]
```

RefLayerHorizontalDeltaChroma = ref_layer_horizontal_delta_chroma[rLId]
RefLayerVerticalDeltaChroma = ref_layer_vertical_delta_chroma[rLId]

$$phaseX = (\ cIdx\ ==\ 0\ )\ ?\ (ScaledRefLayerLeftPhase\ <<2)$$

$$(ScaledRefLayerLeftPhase <<1 + scaled\_ref\_layer\_left\_phase\_chroma)$$

$$phaseY = (\ cIdx\ ==\ 0\ )\ ?\ (ScaledRefLayerTopPhase\ <<2)$$

$$(ScaledRefLayerTopPhase <<1 + scaled\_ref\_layer\_top\_phase\_chroma)$$

$$deltaX = (\ cIdx\ = =\ 0\ )\ ?\ (RefLayerHorizontalDelta\ <<1)$$

$$(RefLayerHorizontalDelta + RefLayerHorizontalDeltaChroma <<1)$$

$$deltaY = (\ cIdx\ = =\ 0\ )\ ?\ (RefLayerVerticalDelta\ <<1)\ :\ (RefLayerVerticalDelta +$$

$$RefLayerVerticalDeltaChroma <<1)$$

$$addX = (\ ScaleFactorX * phaseX + 4\ ) >> 3$$

$$addY = (\ ScaleFactorY * phaseY + 4\ ) >> 3$$

$$xRef16 = (\ (\ (\ xP - offsetX) * ScaleFactorX + addX + (\ 1 << 11\ )\ ) >> 12\ ) - deltaX$$

$$yRef16 = (\ (\ (\ yP - offsetY) * ScaleFactorY + addY + (\ 1 << 11\ )\ ) >> 12\ ) - deltaY$$

The scaled reference layer phase offset parameters scaled_ref_layer_left_phase, scaled_ref_layer_left_phase_chroma, scaled_ref_layer_top_phase, and scaled_ref_layer_top_phase_chroma provide additional independent finer level or resolution over the previous scaled reference layer phase offset parameters scaled_ref_layer_left_offset, scaled_ref_layer_top_offset, scaled_ref_layer_right_offset and scaled_ref_layer_bottom_offset. In addition, the reference layer phase offset parameters ref_layer_horizontal_delta, ref_layer_vertical_delta, ref_layer_horizontal_delta_chroma and ref_layer_vertical_delta_chroma provide finer reference layer phase offset resolution.

Table 2: Proposed syntax for activating PPS multilayer extension.

| pic_parameter_set_rbsp( ) { | Descriptor |
|---|---|
| pps_pic_parameter_set_id | ue(v) |
| pps_ seq_parameter_set_id | ue(v) |
| ... | |
| pps_extension_flag | u(1) |
| if( pps_extension_flag ) { | |
| for ( i = 0; i < 8; i++ ) | |
| pps_extension_type_flag[ i ] | u(1) |
| if( pps_extension_type_flag[ 0 ]) | |

(continued)

| pic_parameter_set_rbsp( ) { | Descriptor |
|---|---|
| poc_reset_info_present_flag | u(1) |
| if( pps_extension_type_flag[ 1 ] ) | |
| pps_multilayer_extension( ) | |
| if( pps_extension_type_flag[ 7] ) | |
| while(more_rbsp_data( ) ) | |
| pps_extension_data_flag | u(1) |
| } | |
| rbsp trailing bits( ) | |
| } | |

Table 3: Proposed syntax for signaling offsets at PPS multilayer extension.

| pps_multilayer_ extension( ) { | Descriptor |
|---|---|
| **num_scaled_ref_layer_offsets** | ue(v) |
| for( i = 0; i < num_scaled_ref_layer_offsets; i++ ) { | |
| **scaled_ref_layer_id**[ i ] | u(6) |
| **scaled_ref_layer_left_offset**[ scaled_ref_layer_id[ i ] ] | se(v) |
| **scaled_ref_layer_top_offset**[ scaled_ref_layer_id[ i ] ] | se(v) |
| **scaled_ref_layer_right_offset**[ scaled_ref_layer_id[ i ] ] | se(v) |
| **scaled_ref_layer_bottom_offset**[ scaled_ref_layer_id[ i ] ] | se(v) |
| **scaled_ref_layer_left_phase**[ scaled_ref_layer_id[ i ] ] | se(v) |
| **scaled_ref_layer_top_phase**[ scaled_ref_layer_id[ i ] ] | se(v) |
| **ref_layer_horizontal_delta**[ scaled_ref_layer_id[ i ] ] | se(v) |
| **ref_layer_vertical_delta**[ scaled_ref_layer_id[ i ] ] | se(v) |
| **ref_layer_horizontal_delta_chroma** [ scaled_ref_layer_id[ i ] ] | ue(v) |
| **ref_ layer_vertical_delta_chroma** [scaled_ref_layer_id[ i ] ] | ue(v) |
| } | |
| **scaled_ref_layer_left_phase_chroma** | ue(v) |
| **scaled_ref_layer_top_phase_chroma** | ue(v) |
| } | |

The proposed syntax allows for interlace to progressive scalability and finer alignment between layers. Example syntax was given to illustrate how additional phase offset parameters in both scaled reference layer and the reference layer can be used for alignment between layers.

In one proposed approach, the resolution of the scaled reference layer offset is increased from 2-integer pel. The original coarser resolution allows for selection of a region in the scale reference layer, while the additional proposed finer resolution allows for finer local phase offset between layers.

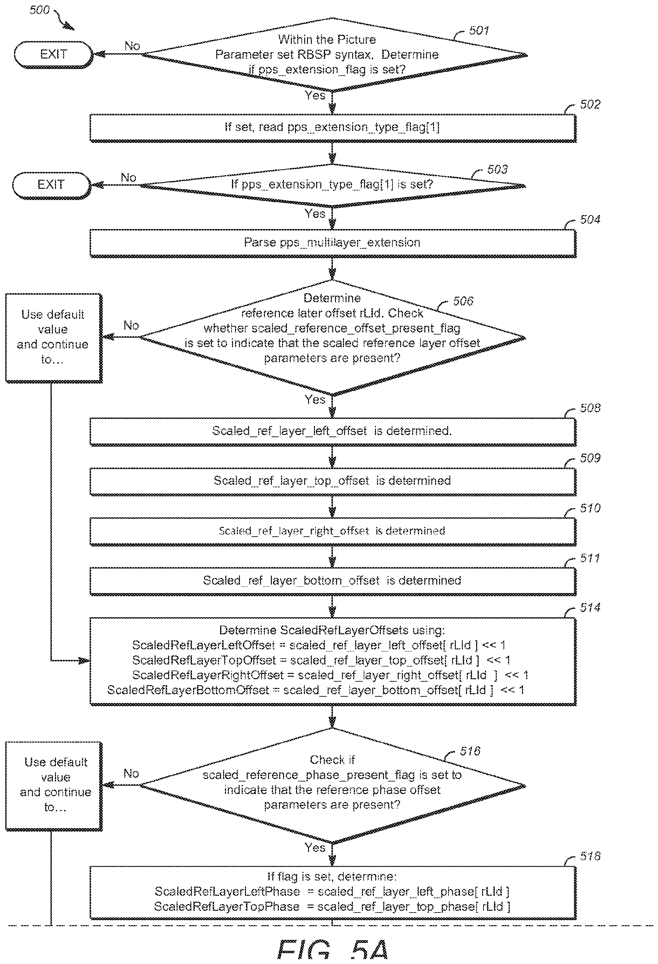

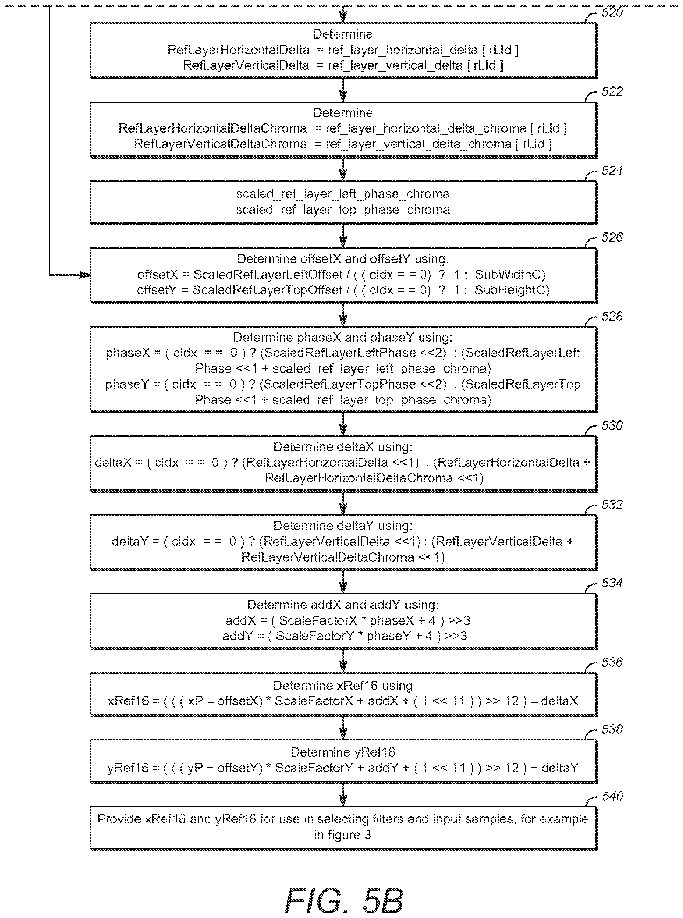

FIGS. 5a and 5b are a flow chart illustrating one example of a method **500** for coding scalable video. At block **501** within the Picture Parameter set RBSP syntax, determine if a pps_extension_flag (e.g. pps_extension_present_flag) is set. At **502,** the PPS multilayer extension flag is read or examined to determine if the pps_multilayer_extension should be parsed. In some cases, for example, when using an encoder, this step is referred to as signaling. It is understood that in the case of an encoder or encoding, the corresponding encoder-appropriate terminology is assumed. At **503,** if pps_extension_type_flag[1] is set, specifying that the pps_multilayer_extension syntax structure is present, the method proceeds **504** to the pps_multilayer_extension and the rest of the steps after **503** are processed.

At block **506,** reference_layer_offset rLId is determined. A scaled_reference_offset_present_flag (e.g. scaled_ref_layer_offset_present_flag) is checked to determine whether it is set to indicate that the scaled reference layer offset parameters are present.

If the flag is set, at block **508,** scaled_ref_layer_left_offset is determined. Next at block **509,** scaled_ref_layer_top_offset is determined. At block **510,** scaled_ref_layer right offset is determined. At block **511,** scaled_ref_layer_bottom_offset is determined.

Next, at block **514,** determine ScaledRefLayerOffsets using:

ScaledRefLayerLeftOffset = scaled_ref_layer_left_offset[rLId] << 1,
ScaledRefLayerTopOffset = scaled_ref_layer_top_offset[rLId] << 1,
ScaledRefLayerRightOffset = scaled_ref_layer_right_offset[rLId] << 1,
ScaledRefLayerBottomOffset = scaled_ref_layer_bottom_offset[rLId] << 1.

At decision **516** check if scaled_reference_phase_present_flag is set to indicate that the reference phase offset parameters are present

If flag is set, At block **518,** determine:

ScaledRefLayerLeftPhase = scaled_ref_layer_left_phase[rLId]
ScaledRefLayerTopPhase = scaled_ref_layer_top_phase[rLId]

At block **520,** determine
RefLayerHorizontalDelta = ref_layer_horizontal_delta[rLId]
RefLayerVerticalDelta = ref_layer_vertical_delta[rLId]

Next, at block **522,** determine
RefLayerHorizontalDeltaChroma = ref_layer_horizontal_delta_chroma[rLId]
RefLayerVerticalDeltaChroma = ref_layer_vertical_delta_chroma[rLId]

At block **524,** determine:

scaled_ref_layer_left_phase_chroma
scaled_ref_layer_top_phase_chroma

And then at block **526,** determine offsetX and offsetY using:

$$offsetX = ScaledRefLayerLeftOffset / ( ( cIdx == 0) \ ? \ 1 : \ SubWidthC)$$

$$offsetY = ScaledRefLayerTopOffset / ( ( cIdx == 0) \ ? \ 1 : \ SubHeightC)$$

At block **528,** determine phaseX and phaseY using:

phaseX = (cIdx == 0)? (ScaledRefLayerLeftPhase <<2): (ScaledRefLayerLeftPhase <<1 + scaled_ref_layer_left_phase_chroma)
phaseY = (cIdx == 0)? (ScaledRefLayerTopPhase <<2): (ScaledRefLayerTopPhase <<1 + scaled_ref_layer_top_phase_chroma)

Next, at block **530,** determine deltaX and deltaY using:

$$deltaX = ( cIdx == 0 ) \ ? \ (RefLayerHorizontalDelta <<1) : (RefLayerHorizontalDelta + RefLayerHorizontalDeltaChroma <<1)$$

and at block **532** determine deltaY using:

$$\text{deltaY} = (\ \text{cIdx} \ == \ 0\ )\ ?\ (\text{RefLayerVerticalDelta} <<1) : (\text{RefLayerVerticalDelta} + \text{RefLayerVerticalDeltaChroma} <<1)$$

Next at block **534,** determine addX and addY using:

$$\text{addX} = (\ \text{ScaleFactorX} * \text{phaseX} + 4\ ) >>3$$

$$\text{addY} = (\ \text{ScaleFactorY} * \text{phaseY} + 4\ ) >>3$$

Next, at block **536** determine xRef16 using

$$\text{xRef16} = (\ (\ (\ \text{xP} - \text{offsetX}) * \text{ScaleFactorX} + \text{addX} + (\ 1 << 11\ )\ ) >> 12\ ) - \text{deltaX}$$

At block **538** determine yRef16

$$\text{yRef16} = (\ (\ (\ \text{yP} - \text{offsetY}) * \text{ScaleFactorY} + \text{addY} + (\ 1 << 11\ )\ ) >> 12\ ) - \text{deltaY}$$

Finally, at block **540,** provide xRef16 and yRef16 for use in selecting filters and input samples, for example in Figure 3.

Illustrative Operating Environment

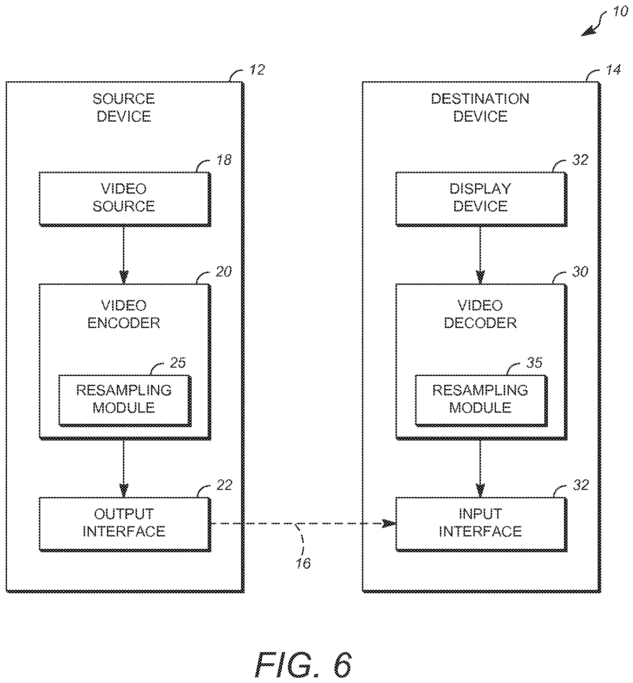

FIG. 6 is a simplified block diagram that illustrates an example video coding system 10 that may utilize the techniques of this disclosure. As used described herein, the term "video coder" can refer to either or both video encoders and video decoders. In this disclosure, the terms "video coding" or "coding" may refer to video encoding and video decoding.

As shown in FIG. 6, video coding system **10** includes a source device **12** and a destination device **14.** Source device **12**generates encoded video data. Accordingly, source device **12** may be referred to as a video encoding device. Destination device **14** may decode the encoded video data generated by source device **12.** Accordingly, destination device **14** may be referred to as a video decoding device. Source device **12** and destination device **14** may be examples of video coding devices.

Destination device **14** may receive encoded video data from source device **12** via a channel **16.** Channel **16** may comprise a type of medium or device capable of moving the encoded video data from source device **12** to destination device **14.** In one example, channel 16 may comprise a communication medium that enables source device **12** to transmit encoded video data directly to destination device **14** in real-time.

In this example, source device 12 may modulate the encoded video data according to a communication standard, such as a wireless communication protocol, and may transmit the modulated video data to destination device **14.** The communication medium may comprise a wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or other equipment that facilitates communication from source device **12** to destination device **14.** In another example, channel **16** may correspond to a storage medium that stores the encoded video data generated by source device **12.**

In the example of FIG. 6, source device **12** includes a video source **18,** video encoder **20,** and an output interface **22.** In some cases, output interface **22** may include a modulator/demodulator (modem) and/or a transmitter. In source device **12,** video source **18** may include a source such as a video capture device, e.g., a video camera, a video archive containing previously captured video data, a video feed interface to receive video data from a video content provider, and/or a computer graphics system for generating video data, or a combination of such sources.

Video encoder **20** may encode the captured, pre-captured, or computer-generated video data. The encoded video data may be transmitted directly to destination device **14** via output interface **22** of source device **12.** The encoded video data may also be stored onto a storage medium or a file server for later access by destination device **14** for decoding and/or playback.

In the example of FIG. 6, destination device 14 includes an input interface 28, a video decoder 30, and a display device **32.** In some cases, input interface **28** may include a receiver and/or a modem. Input interface **28** of destination device **14** receives encoded video data over channel **16.** The encoded video data may include a variety of syntax elements generated by video encoder **20** that represent the video data. Such syntax elements may be included with the encoded video data transmitted on a communication medium, stored on a storage medium, or stored a file server.

Display device **32** may be integrated with or may be external to destination device **14.** In some examples, destination device **14** may include an integrated display device and may also be configured to interface with an external display device. In other examples, destination device **14** may be a display device. In general, display device **32** displays the decoded video data to a user.

Video encoder **20** includes a resampling module **25** which may be configured to code (e.g., encode) video data in a scalable video coding scheme that defines at least one base layer and at least one enhancement layer. Resampling module **25** may resample at least some video data as part of an encoding process, wherein resampling may be performed in an adaptive manner using resampling filters. Likewise, video decoder **30** may also include a resampling module **35** similar to the resampling module **25** employed in the video encoder **20.**

Video encoder **20** and video decoder **30** may operate according to a video compression standard, such as the High Efficiency Video Coding (HEVC) standard. The HEVC standard is being developed by the Joint Collaborative Team on Video Coding (JCT-VC) of ITU-T Video Coding Experts Group (VCEG) and ISO/IEC Motion Picture Experts Group (MPEG). A recent draft of the HEVC standard is described in Recommendation ITU-T H.265 | International Standard ISO/IEC 23008-2, High efficiency video coding, version 2, October 2014.

Additionally or alternatively, video encoder **20** and video decoder **30** may operate according to other proprietary or industry standards, such as the ITU-T H.264 standard, alternatively referred to as MPEG-4, Part 10, Advanced Video Coding (AVC), or extensions of such standards. The techniques of this disclosure, however, are not limited to any particular coding standard or technique. Other examples of video compression standards and techniques include MPEG-2, ITU-T H.263 and proprietary or open source compression formats and related formats.

Video encoder **20** and video decoder **30** may be implemented in hardware, software, firmware or any combination thereof. For example, the video encoder **20** and decoder **30** may employ one or more processors, digital signal processors (DSPs), application specific integrated circuits (ASICs), field programmable gate arrays (FPGAs), discrete logic, or any combinations thereof. When the video encoder **20** and decoder **30** are implemented partially in software, a device may store instructions for the software in a suitable, non-transitory computer-readable storage medium and may execute the instructions in hardware using one or more processors to perform the techniques of this disclosure. Each of video encoder **20** and video decoder **30** may be included in one or more encoders or decoders, either of which may be integrated as part of a combined encoder/decoder (CODEC) in a respective device.

Aspects of the subject matter described herein may be described in the general context of computer-executable instructions, such as program modules, being executed by a computer. Generally, program modules include routines, programs, objects, components, data structures, and so forth, which perform particular tasks or implement particular abstract data types. Aspects of the subject matter described herein may also be practiced in distributed computing environments where tasks are performed by remote processing devices that are linked through a communications network. In a distributed computing environment, program modules may be located in both local and remote computer storage media including memory storage devices.

Also, it is noted that some embodiments have been described as a process which is depicted as a flow diagram or block diagram. Although each may describe the operations as a sequential process, many of the operations can be performed in parallel or concurrently. A process may have additional steps not included in the figure.

Particular embodiments may be implemented in a non-transitory computer-readable storage medium for use by or in connection with the instruction execution system, apparatus, system, or machine. The computer-readable storage medium contains instructions for controlling a computer system to perform a method described by particular embodiments. The computer system may include one or more computing devices. The instructions, when executed by one or more computer processors, may be configured to perform that which is described in particular embodiments.

Although the subject matter has been described in language specific to structural features and/or methodological acts, it is to be understood that the subject matter defined in the appended claims is not necessarily limited to the specific features or acts described above.

**Claims**

**1.** A system for scalable video coding, comprising:

a first coding layer arrangement comprising modules for coding video with a base resolution to provide a first coding layer;
a second coding layer arrangement comprising modules for coding video with an enhanced resolution having a higher resolution than a base resolution to provide a second coding layer;

wherein pixel values in the second coding layer are predicted based on pixel values in the first coding layer;

wherein the prediction of a value at a pixel location in the second coding layer is based on a corresponding value at a pixel location in the first coding layer;

wherein the corresponding pixel location in the first coding layer is computed based on the pixel location in the second coding layer;

wherein the pixel location in the second coding layer is (xP, yP);

wherein the corresponding pixel location in the first coding layer is computed as (xRefl6, yRefl6) in units of 1/16-th sample relative to the top-left sample of the first coding layer, where:

variables ScaleFactorX and ScaleFactorY are computed based on the ratio of the reference layer to the scaled reference layer width and height;

variable cldx specifies the color component index and the values SubWidthC and SubHeightC are specified depending on the chroma format sampling structure;

and where:

$$xRef16 = ( ( ( xP - offsetX ) * ScaleFactorX + addX + ( 1 << 11 ) ) >> 12 ) - deltaX;$$

and

$$yRef16 = ( ( ( yP - offsetY ) * ScaleFactorY + addY + ( 1 << 11 ) ) >> 12 ) - deltaY;$$

wherein

$$offsetX = ScaledRefLayerLeftOffset / ( ( cIdx == 0) \ ? \ 1 : \ SubWidthC);$$

$$offsetY = ScaledRefLayerTopOffset / ( ( cIdx == 0) \ ? \ 1 : \ SubHeightC);$$

ScaledRefLayerLeftOffset = scaled_ref_layer_left_offset[rLId] << 1;

ScaledRefLayerTopOffset = scaled_ref_layer_top_offset[rLId] << 1;

scaled_ref_layer_left_offset[rLId] specifies a horizontal offset between a top-left luma sample of an associated inter-layer picture with nuh_layer_id equal to rLId and the top-left luma sample of the current picture in units of two luma samples;

scaled_ref_layer_top_offset[rLId] specifies the vertical offset between the top-left luma sample of an associated inter-layer picture with nuh_layer_id equal to rLId and the top-left luma sample of the current picture in units of two luma samples; and

wherein the signaling of scaled_ref_layer_left_offset, and scaled_ref_layer_top_offset occurs at the PPS level,

and where:

$$deltaX = ( cIdx == 0 ) ? (RefLayerHorizontalDelta << 1) : (RefLayerHorizontalDelta + RefLayerHorizontalDeltaChroma << 1);$$

$$deltaY = ( cIdx == 0 ) ? (RefLayerVerticalDelta << 1) : (RefLayerVerticalDelta + RefLayerVerticalDeltaChroma << 1);$$

$$addX = ( ScaleFactorX * phaseX + 4 ) >> 3;$$

$$addY = ( ScaleFactorY * phaseY + 4 ) >> 3;$$

$$phaseX = ( cIdx == 0 )\ ?\ (ScaledRefLayerLeftPhase <<2) : (ScaledRefLayerLeftPhase <<1 + scaled\_ref\_layer\_left\_phase\_chroma);$$

$$phaseY = ( cIdx == 0 )\ ?\ (ScaledRefLayerTopPhase <<2) : (ScaledRefLayerTopPhase <<1 + scaled\_ref\_layer\_top\_phase\_chroma);$$

ScaledRefLayerLeftPhase = scaled_ref_layer_left_phase[rLId];
ScaledRefLayerTopPhase = scaled_ref_layer_top_phase[rLId];
RefLayerHorizontalDelta = ref_layer_horizontal_delta[rLId];
RefLayerVerticalDelta = ref_layer_vertical_delta[rLId];
scaled_ref_layer_left_phase[rLId] specifies a horizontal luma offset between nuh_layer_id equal to rLId and the current picture in units of ½ luma samples;
scaled_ref_layer_top_phase[rLId] specifies a vertical luma offset between nuh layer _id equal to rLId and the current picture in units of ½ luma samples;
scaled_ref_layer_left_phase_chroma specifies the horizontal chroma offset relative to luma in units of 1/4 luma samples;
scaled_ref_layer_top_phase_chroma specifies the vertical chroma offset relative to luma in units of 1/4 luma samples;
ref_layer_horizontal_delta[rLId] specifies a horizontal luma offset between nuh layer _id equal to rLId and the current picture in units of 1/8 luma samples;
ref_layer_vertical_delta[rLId] specifies a vertical luma offset between nuh_layer_id equal to rLId and the current picture in units of 1/8 luma samples;
RefLayerHorizontalDeltaChroma = ref_layer_horizontal_delta_chroma[rLId];
RefLayerVerticalDeltaChroma = ref_layer_vertical_delta_chroma[rLId];
ref_layer_horizonal_delta_chroma[rLId] specifies the horizontal offset between the chroma samples and luma samples in nuh_layer_id equal to rLId in unit of 1/4 samples;
ref_layer_vertical_delta_chroma[rLId] specifies the vertical offset between the chroma samples and luma samples in nuh_layer_id equal to rLId in unit of 1/4 samples; and
wherein the signaling of scaled_ref_layer_left_phase, scaled_ref_layer_top_phase, ref_layer_horizontal_delta, ref_layer_vertical_delta, ref_layer_horizontal_delta_chroma, ref_layer_vertical_delta_chroma, scaled_ref_layer_left_phase_chroma and scaled_ref_layer_top_phase_chroma occurs at the PPS level.

2. The system of claim 1, wherein the system is a High Efficiency Video Coding, HEVC, standard system and scaled_ref_layer_left_offset, scaled_ref_layer_top_offset, scaled_ref_layer_left_phase, scaled_ref_layer_top_phase, ref_layer_horizontal_delta, and ref_layer_vertical_delta are signaled in a pps_multilayer_extension syntax that is conditional on a pps_extension_type_flag[1] flag.

3. The system of claim 1, wherein the system is a High Efficiency Video Coding, HEVC, standard system and scaled_ref_layer_left_offset and scaled_ref_layer_top_offset are signaled conditional on a scaled_reference_offset_present_flag flag, and scaled_ref_layer_left_phase, scaled_ref_layer_top_phase, ref_layer_horizontal_delta, ref_layer_vertical_delta, rel_layer_horizontal_delta_chroma, ref_layer_vertical_delta_chroma, scaled_ref_layer_left_phase_chroma and scaled_ref_layer_top_phase_chroma are signaled conditional on a scaled_reference_phase_present_flag flag.

**Patentansprüche**

1. System für skalierbare Videocodierung, Folgendes umfassend:

eine erste Codierungsschichtanordnung, umfassend Module zum Codieren von Videos mit einer Basisauflösung, um eine erste Codierungsschicht bereitzustellen;

eine zweite Codierungsschichtanordnung, umfassend Module zum Codieren von Videos mit einer verbesserten Auflösung, die eine höhere Auflösung als eine Basisauflösung aufweisen, um eine zweite Codierungsschicht bereitzustellen;

wobei Pixelwerte in der zweiten Codierungsschicht basierend auf Pixelwerten in der ersten Codierungsschicht vorhergesagt werden;

wobei die Vorhersage eines Wertes an einem Pixelstandort in der zweiten Codierungsschicht auf einem entsprechenden Wert an einem Pixelort in der ersten Codierungsschicht basiert;

wobei der entsprechende Pixelstandort in der ersten Codierungsschicht basierend auf dem Pixelstandort in der zweiten Codierungsschicht berechnet wird;

wobei der Pixelstandort in der zweiten Codierungsschicht (xP, yP) ist;

wobei der entsprechende Pixelstandort in der ersten Codierungsschicht als (xRef16, yRef16) in Einheiten von einer 1/16-ten Abtastung relativ zu der Abtastung oben links der ersten Codierungsschicht berechnet wird, wobei:

die Variablen ScaleFactorX und ScaleFactorY basierend auf dem Verhältnis der Referenzschicht zu der Breite und Höhe der skalierten Referenzschicht berechnet werden;

die Variable cIdx den Index für eine Farbkomponente vorgibt und die Werte SubWidthC und SubHeightC abhängig von der Farbtonformatabtastungsstruktur vorgegeben werden; und

wobei:

$$xRef16 = (((xP - offsetX) * ScaleFactorX + addX + (1 << 11)) >> 12) - deltaX;$$

und

$$yRef16 = (((yP - offsetY) * ScaleFactorY + addY + (1 << 11)) >> 12) - deltaY;$$

$$offsetX = ScaledRefLayerLeftOffset / ((cIdx = = 0) ? 1 : SubWidthC);$$

$$offsetY = ScaledRefLayerTopOffset / ((cIdx = = 0) ? 1 : SubHeightC);$$

ScaledRefLayerLeftOffset = scaled_ref_layer_left_offset[rLId] << 1;

ScaledRefLayerTopOffset = scaled_ref_layer_top_offset[rLId] << 1;

scaled_ref_layer_left_offset[rLId] einen horizontalen Versatz zwischen einer Lumaabtastung oben links eines zugeordneten Zwischenschichtbildes mit nuh_layer_id gleich rLId und der Lumaabtastung oben links des aktuellen Bildes in Einheiten von zwei Lumaabtastungen vorgibt;

scaled_ref_layer_top_offset [rLId] den vertikalen Versatz zwischen der Lumaabtastung oben links eines zugeordneten Zwischenschichtbildes mit nuh_layer_id gleich rLId und der Lumaabtastung oben links des aktuellen Bildes in Einheiten von zwei Lumaabtastungen vorgibt; und

wobei das Signalisieren von scaled_ref_layer_left_offset und scaled_ref_layer_top_offset auf der PPS-Ebene auftritt und wobei:

$$deltaX = (cIdx = = 0) ? (RefLayerHorizontalDelta <<1) : (RefLayerHorizontalDelta + RefLayerHorizontalDeltaChroma <<1);$$

$$deltaY = (cIdx = = 0) ? (RefLayerVerticalDelta <<1) : (RefLayerVerticalDelta + RefLayerVerticalDeltaChroma <<1);$$

$$addX = (ScaleFactorX * phaseX + 4) >> 3;$$

$$addY = (ScaleFactorY * phaseY + 4) >> 3;$$

phaseX = (cldx = = 0 ) ? (ScaledRefLayerLeftPhase << 2) : (ScaledRefLayerLeftPhase

<< 1 + scaled_ref_layer_left_phase_chroma);

phaseY = (cldx = = 0) ? (ScaledRefLayerTopPhase << 2) : (ScaledRefLayerTopPhase <<1 + scaled_ref_layer_top_phase_chroma);

ScaledRefLayerLeftPhase = scaled_ref_layer_left_phase[rLId];
ScaledRefLayerTopPhase = scaled_ref_layer_top_phase[rLId];
RefLayerHorizontalDelta = ref layer horizontal delta [rLId];
RefLayerVerticalDelta = ref_layer_vertical_delta [rLId];
scaled_ref_layer_left-phase [rLId] einen horizontalen Luma-Versatz zwischen nuh_layer_id gleich rLId und dem aktuellen Bild in Einheiten von ½ Lumaabtastungen vorgibt;
scaled_ref_layer_top_phase [rLId] einen vertikalen Luma-Versatz zwischen nuh_layer_id gleich rLId und dem aktuellen Bild in Einheiten von ½ Lumaabtastungen vorgibt;
scaled_ref_layer_left-phase_chroma den horizontalen Farbsättigungsversatz relativ zu der Luma in Einheiten von 1/4 Lumaabtastungen vorgibt;
scaled_ref_layer_top_phase_chroma den vertikalen Farbtonversatz relativ zu dem Luma in Einheiten von 1/4 Lumaabtastungen vorgibt;
ref layer horizontal delta [rLId] einen horizontalen Luma-Versatz zwischen nuh_layer_id gleich rLId und dem aktuellen Bild in Einheiten von 1/8 Lumaabtastungen vorgibt;
ref layer vertical delta [rLId] einen vertikalen Luma-Versatz zwischen nuh_layer_id gleich rLId und dem aktuellen Bild in Einheiten von 1/8 Lumaabtastungen vorgibt;
RefLayerHorizontalDeltaChroma = ref_layer_horizontal_delta_chroma [rLId];
RefLayerVerticalDeltaChroma = ref layer vertical delta chroma [rLId];
ref_layer_horizonal_delta_chroma [rLId] den horizontalen Versatz zwischen den Farbtonabtastungen und den Lumaabtastungen in nuh_layer_id gleich rLId in Einheiten von 1/4 Abtastungen vorgibt;
ref_layer_vertical_delta_chroma [rLId] den vertikalen Versatz zwischen den Farbtonabtastungen und den Lumaabtastungen in nuh_layer_id gleich rLId in Einheiten von 1/4 Abtastungen vorgibt; und
wobei das Signalisieren von scaled_ref_layer_left_phase, scaled_ref_layer_top_phase, ref_layer_horizontal_delta, ref layer vertical delta, ref-layer_horizontal_delta_chroma, ref_layer_vertical_delta_chroma, scaled_ref_layer_left_phase_chroma und scaled_ref_layer_top_phase_chroma auf der PPS-Ebene auftritt.

2.  System nach Anspruch 1, wobei das System ein Hochleistungsvideocodierungs(*high efficiency video coding* - HEVC)standardsystem ist und scaled_ref_layer_left_offset, scaled_ref_layer_top_offset, scaled_ref_layer_left_phase, scaled_ref_layer_top_phase, ref_layer_horizontal_delta und ref_layer_vertical_delta in einer pps_multilayer_extension Syntax signalisiert werden, die bedingt von einem apps_extension_type_flag[1] Flag ist.

3.  System nach Anspruch 1, wobei das System ein Hochleistungsvideocodierungs(HEVC)standardsystem ist und scaled_ref_layer_left_offset and scaled_ref_layer_top_offset bedingt auf einem scaled_reference_offset_present_flag Flag signalisiert werden und scaled_ref_layer_left_phase, scaled_ref_layer_top_phase, ref_layer_horizontal_delta, ref_layer_vertical_delta, ref_layer_horizontal_delta_chroma, ref_layer_vertical_delta_chroma, scaled_ref_layer_left_phase_chroma und scaled_ref_layer_top_phase_chroma bedingt von einem scaled_reference_phase_present_flag Flag signalisiert werden.

**Revendications**

1.  Système permettant un codage vidéo échelonnable comprenant :

un premier agencement de couche « layer » de codage comprenant des modules de codage vidéo d'une résolution de base afin de fournir une première couche de codage ;
un second agencement de couche de codage comprenant des modules de codage vidéo d'une résolution améliorée ayant une résolution supérieure à une résolution de base pour fournir une seconde couche de codage ;

dans lequel les valeurs de pixel dans la seconde couche de codage sont prédites sur la base de valeurs de pixel dans la première couche de codage ;

dans lequel la prédiction d'une valeur à un emplacement de pixel dans la seconde couche de codage est basée sur une valeur correspondante à un emplacement de pixel dans la première couche de codage ;

dans lequel l'emplacement de pixel correspondant dans la première couche de codage est calculé sur la base de l'emplacement de pixel dans la seconde couche de codage ;

dans lequel l'emplacement de pixel dans la seconde couche de codage est (xP, yP) ;

dans lequel l'emplacement de pixel correspondant dans la première couche de codage est calculé comme étant (xRef16, yRef16) en unités de $1/16^{ème}$ d'échantillon par rapport à l'échantillon supérieur gauche de la première couche de codage, où :

des variables ScaleFactorX et ScaleFactorY sont calculées sur la base du rapport entre la couche de référence et la largeur et la hauteur de la couche de référence mise à l'échelle ;

la variable cldx spécifie l'indice de composante de couleur et les valeurs SubWidthC et SubHeightC sont spécifiées en fonction de la structure d'échantillonnage du format de chrominance, « chroma » ;

et où :

$$xRef16 = (((xP - offsetX) * ScaleFactorX + addX + (1 << 11)) >> 12) - deltaX ;$$

et

$$yRef16 = (((yP - offsetY) * ScaleFactorY + addY + (1 << 11)) >> 12) - deltaY ;$$

dans lequel offsetX = ScaledRefLayerLeftOffset / ((cldx = = 0) ? 1 : SubWidthC) ;

$$offsetY = ScaledRefLayerTopOffset / ((cldx = = 0) ? 1 : SubHeightC) ;$$

ScaledRefLayerLeftOffset = scaled_ref_layer_left_offset [rLId] << 1 ;

ScaledRefLayerTopOffset = scaled_ref_layer_top_offset [rLId] << 1 ;

scaled_ref_layer_left_offset [rLId] spécifie un décalage horizontal entre un échantillon de luminance supérieur gauche d'une image intercouche associée ayant un nuh_layer_id égal à rLId et l'échantillon de luminance supérieur gauche de l'image actuelle en unités de deux échantillons de luminance ;

scaled_ref_layer_top_offset [rLId] spécifie le décalage vertical entre l'échantillon de luminance supérieur gauche d'une image intercouche associée ayant un nuh_layer_id égal à rLId et l'échantillon de luminance supérieur gauche de l'image actuelle en unités de deux échantillons de luminance ; et

dans lequel la signalisation de scaled_ref_layer_left_offset et de scaled_ref_layer_top_offset se produit au niveau du PPS,

et où :

$$deltaX = (cldx = = 0) ? (RefLayerHorizontalDelta << 1) : (RefLayerHorizontalDelta + RefLayerHorizontalDeltaChroma <<1) ;$$

$$deltaY = (cldx = = 0) ? (RefLayerVerticalDelta <<1) : (RefLayerVerticalDelta + RefLayerVerticalDeltaChroma <<1) ;$$

$$addX = (ScaleFactorX * phaseX + 4) >> 3 ;$$

$$addY = (ScaleFactorY * phaseY + 4) >> 3 ;$$

$$phaseX = (cldx = = 0) \ ? \ (ScaledRefLayerLeftPhase << 2) :$$

$$(ScaledRefLayerLeftPhase << 1 + scaled\_ref\_layer\_left\_phase\_chroma) ;$$

$$phaseY = (cldx = = 0) \ ? \ (ScaledRefLayerTopPhase << 2) :$$

$$(ScaledRefLayerTopPhase << 1 + scaled\_ref\_layer\_top\_phase\_chroma) ;$$

ScaledRefLayerLeftPhase = scaled_ref_layer_left-phase[rLId] ;
ScaledRefLayerTopPhase = scaled_ref_layer_top_phase[rLId] ;
RefLayerHorizontalDelta = ref layer horizontal delta [rLId] ;
RefLayerVerticalDelta = ref_layer_vertical_delta[rLId] ;
scaled_ref_layer_left_phase [rLId] spécifie un décalage de luminance horizontal entre nuh_layer_id égal à rLId et l'image actuelle en unités de ½ échantillons de luminance ;
scaled_ref_layer_top_phase [rLId] spécifie un décalage de luminance vertical entre nuh_layer_id égal à rLId et l'image actuelle en unités de ½ échantillons de luminance ;
scaled_ref_layer_left_phase_chroma spécifie le décalage de chrominance horizontal par rapport à la luminance en unités de 1/4 d'échantillons de luminance ;
scaled_ref_layer_top_phase_chroma spécifie le décalage de chrominance vertical par rapport à la luminance en unités de 1/4 d'échantillons de luminance ;
ref del horizontal horizontal delta [rLId] spécifie un décalage de luminance horizontal entre nuh_layer_id égal à rLId et l'image actuelle en unités de 1/8 d'échantillons de luminance ;
ref layer vertical delta [rLId] spécifie un décalage de luminance vertical entre nuh_layer_id égal à rLId et l'image actuelle en unités de 1/8 d'échantillons de luminance ;
RefLayerHorizontalDeltaChroma = ref_layer_horizontal_delta_chroma [rLId] ;
RefLayerVerticalDeltaChroma = ref layer vertical delta chroma [rLId] ;
ref_layer_horizonal_delta_chroma [rLId] spécifie le décalage horizontal entre les échantillons de chrominance et les échantillons de luminance dans nuh_layer_id égal à rLId en unités de 1/4 d'échantillons ;
ref_layer_vertical_delta_chroma [rLId] spécifie le décalage vertical entre les échantillons de chrominance et les échantillons de luminance dans nuh_layer_id égal à rLId en unité de 1/4 d'échantillons ; et
dans lequel la signalisation de scaled_ref_layer_left_phase, scaled_ref_layer_top_phase, ref_layer_horizontal_delta, ref layer vertical delta, ref-layer_horizontal_delta_chroma, ref_layer_vertical_delta_chroma, scaled_ref_layer_left_phase_chroma et scaled_ref_layer_top_phase_chroma se produit au niveau du PPS.

2.  Système selon la revendication 1, dans lequel le système est un système standard de codage vidéo à haute efficacité, HEVC, et scaled_ref_layer_left_offset, scaled_ref_layer_top_offset, scaled_ref_layer_left_phase, scaled_ref_layer_top_phase, ref_layer_horizontal_delta, et ref_layer_vertical_delta sont signalés dans une syntaxe pps_multilayer_extension dépendant d'un drapeau « flag » apps_extension_type_flag[1].

3.  Système selon la revendication 1, dans lequel le système est un système standard de codage vidéo à haute efficacité, HEVC, et la signalisation de scaled_ref_layer_left_offset et scaled_ref_layer_top_offset dépend d'un drapeau « flag » scaled_reference_offset_present_flag, et la signalisation de scaled_ref_layer_left_phase, scaled_ref_layer_top_phase, ref_layer_horizontal_delta, ref_layer_vertical_delta, ref_layer_horizontal_delta_chroma, ref_layer_vertical_delta_chroma, scaled_ref_layer_left_phase_chroma et scaled_ref_layer_top_phase_chroma dépend d'un drapeau scaled_reference_phase_present_flag.

*FIG. 1*

x' → [ UPSAMPLE ↑r ] /200/ → y'

## FIG. 2

x' → [ SELECT INPUT SAMPLES ] /300/ → [ SELECT FILTER ] /302/ → [ FILTER INPUT SAMPLES ] /304/ → y'

## FIG. 3

_302a_

SELECT
FILTER

_400_

PHASE(p) SEL

CONTROL

FILTER(n) SEL

_402_

S
E
L

x[m]

_304a_

FILTER INPUT SAMPLES

h[0;p]

h[1;p]

y'[n]

h[n;p]

*FIG. 4*

500

**501** Within the Picture Parameter set RBSP syntax, Determine if pps_extension_flag is set?
— No → EXIT
— Yes ↓

**502** If set, read pps_extension_type_flag[1]
↓

**503** If pps_extension_type_flag[1] is set?
— No → EXIT
— Yes ↓

**504** Parse pps_multilayer_extension
↓

**506** Determine reference later offset rLId. Check whether scaled_reference_offset_present_flag is set to indicate that the scaled reference layer offset parameters are present?
— No → Use default value and continue to...
— Yes ↓

**508** Scaled_ref_layer_left_offset is determined.
↓

**509** Scaled_ref_layer_top_offset is determined
↓

**510** Scaled_ref_layer_right_offset is determined
↓

**511** Scaled_ref_layer_bottom_offset is determined
↓

**514** Determine ScaledRefLayerOffsets using:
ScaledRefLayerLeftOffset = scaled_ref_layer_left_offset[ rLId ] << 1
ScaledRefLayerTopOffset = scaled_ref_layer_top_offset[ rLId ] << 1
ScaledRefLayerRightOffset = scaled_ref_layer_right_offset[ rLId ] << 1
ScaledRefLayerBottomOffset = scaled_ref_layer_bottom_offset[ rLId ] << 1
↓

**516** Check if scaled_reference_phase_present_flag is set to indicate that the reference phase offset parameters are present?
— No → Use default value and continue to...
— Yes ↓

**518** If flag is set, determine:
ScaledRefLayerLeftPhase = scaled_ref_layer_left_phase[ rLId ]
ScaledRefLayerTopPhase = scaled_ref_layer_top_phase[ rLId ]

FIG. 5A

Determine
RefLayerHorizontalDelta = ref_layer_horizontal_delta [ rLId ]
RefLayerVerticalDelta = ref_layer_vertical_delta [ rLId ]

520

Determine
RefLayerHorizontalDeltaChroma = ref_layer_horizontal_delta_chroma [ rLId ]
RefLayerVerticalDeltaChroma = ref_layer_vertical_delta_chroma [ rLId ]

522

scaled_ref_layer_left_phase_chroma
scaled_ref_layer_top_phase_chroma

524

Determine offsetX and offsetY using:
offsetX = ScaledRefLayerLeftOffset / ( ( cIdx = = 0) ? 1 : SubWidthC)
offsetY = ScaledRefLayerTopOffset / ( ( cIdx = = 0) ? 1 : SubHeightC)

526

Determine phaseX and phaseY using:
phaseX = ( cIdx = = 0 ) ? (ScaledRefLayerLeftPhase <<2) : (ScaledRefLayerLeft
Phase <<1 + scaled_ref_layer_left_phase_chroma)
phaseY = ( cIdx = = 0 ) ? (ScaledRefLayerTopPhase <<2) : (ScaledRefLayerTop
Phase <<1 + scaled_ref_layer_top_phase_chroma)

528

Determine deltaX using:
deltaX = ( cIdx = = 0 ) ? (RefLayerHorizontalDelta <<1) : (RefLayerHorizontalDelta +
RefLayerHorizontalDeltaChroma <<1)

530

Determine deltaY using:
deltaY = ( cIdx = = 0 ) ? (RefLayerVerticalDelta <<1) : (RefLayerVerticalDelta +
RefLayerVerticalDeltaChroma <<1)

532

Determine addX and addY using:
addX = ( ScaleFactorX * phaseX + 4 ) >>3
addY = ( ScaleFactorY * phaseY + 4 ) >>3

534

Determine xRef16 using
xRef16 = ( ( ( xP – offsetX) * ScaleFactorX + addX + ( 1 << 11 ) ) >> 12 ) – deltaX

536

Determine yRef16
yRef16 = ( ( ( yP – offsetY) * ScaleFactorY + addY + ( 1 << 11 ) ) >> 12 ) – deltaY

538

Provide xRef16 and yRef16 for use in selecting filters and input samples, for example
in figure 3

540

## FIG. 5B

*FIG. 6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- AHG13: SHVC Upsampling with phase offset adjustment. **MINOO K et al.** 104. MPEG MEETING. MOTION PICTURE EXPERT GROUP, 20 April 2013

- On handling re-sampling phase offsets with fixed filters. **MINOO K et al.** 16. JCT-VC MEETING. JOINT COLLABORATIVE TEAM ON VIDEO CODING